# EUROPEAN PATENT APPLICATION

(11) **EP 4 776 503 A1**
(43) Date of publication of application: **15.07.2026**
(21) Application number: 25151529.2
(22) Date of filing: 13.01.2025
(51) Int. Cl.: H02M 7/5387, H02M 7/5395, H02M 7/493, H02M 1/12, H02M 1/00, H02P 27/08, H02P 5/46, H01R 13/64, H04B 5/24

(54) **METHOD FOR CONNECTING AT LEAST TWO POWER STAGES IN PARALLEL**

(71) Applicant: ABB SCHWEIZ AG, 5400 Baden (CH)
(72) Inventor: Schalk, Martin, 5202 Neumarkt am Wallersee (AT); Guerry, Wilfried, 74410 Saint Jorioz (FR); Maislinger, Franz, 5230 Mattighofen (AT)
(74) Representative: Weiss Patentanwalts GmbH

(57) **Abstract**

In order to simplify parallelization of power stages (PS1, PS2), of a drive axis (D) for example, it is provided to use an adapter (20) having an adapter identification (25), an adapter terminal (AT1, AT2) for each of the power stage output terminals (T1, T2) of the at least two power stages (PS1, PS2) to be connected in parallel and an electric connection circuitry (15) for each electrical phase (U, V, W) of the electrical power system of the parallel-connected at least two power stages (PS1, PS2), wherein each electrical connection circuitry (15) connects adapter phase terminals (AT_{U1}, AT_{V1}, AT_{W1}; AT_{U2}, AT_{V2}, AT_{W2}) of adapter terminals (AT1, AT2) of the adapter (20) corresponding to the same electrical phase (U, V, W) of an electric power system in parallel. The adapter (20) is plugged with its adapter terminals (AT1, AT2) into the power stage output terminals (T1, T2) of the at least two power stages (PS1, PS2) and the adapter identification (25) is detected with an adapter identification detection unit (26) of at least one of the at least two power stages (PS1, PS2) when the adapter terminals (AT1, AT2) of the adapter (20) is plugged into the power stage output terminals (T1, T2). Upon detection of the adapter identification (25), operation of the at least two parallel-connected power stages (PS1, PS2) is changed so that the parallel-connected power stages (PS1, PS2) are operated in synchronization to each other.

## Description

Present invention pertains to a method for connecting at least two power stages in parallel at their respective power stage outputs, wherein each of the power stage outputs provides a number of electrical phases of an electrical power system at a corresponding number of power stage output phase terminals of a power stage output terminal. The invention pertains also to a corresponding arrangement and to a drive axis with such an arrangement.

In the context of drive systems, a drive axis (sometimes also called servo axis) is comprised of an electromotor and an electrical power stage (power electronics) that provides the electrical currents and electrical voltages for driving the electromotor. The such driven electromotor is mechanically connected to and drives a load. The power stage is usually a power converter, like an AC (alternating current) / AC converter, a DC (direct current) / AC converter or a frequency converter, for example. Also combinations of different power converters are conceivable as power stage, like a combination of a AC/DC converter as input stage with an DC/AC converter as output stage, wherein an intermediate circuit in the form of at least one intermediate capacitor is arranged between the two converters. For the invention, it is however not important which type of power stage is used or with which topology a converter is designed. Converters with numerous different topologies are known. The electromotor may also be equipped with an (rotary) encoder which is an electro-mechanical device that converts the angular position or motion (e.g. the speed) of the motor shaft into an output signal (analog or digital). This output signal may be used by the power stage to generate the electrical currents and electrical voltage for driving the electromotor, in a position, speed or torque control of the electromotor, for example. For controlling the electromotor, the drive axis usually also comprises an axis-controller, which uses the output signal for controlling the power stage which in turn drives the electromotor. The axis-controller may be integrated into the power stage.

In a machine a plurality of drive axes may be present for moving movable machine parts with the electromotor, for example. The drive axes may be controlled independently from each other, or drive axes may also be controlled dependent from each other.

A power stage has a nominal current and/or nominal voltage which limits the maximum possible electrical currents and electrical voltages for driving an electromotor of a drive axis. It is well-known to connect two (or even more) power stages at their outputs in parallel in order to increase the achievable electrical current for driving the electromotor. By using two power stages of the same type, the maximum possible drive current may be doubled, for example. The parallelized power stages must be operated and controlled synchronously, so that the generated electrical currents are in phase, for example.

From above, it is obvious that parallelization of power stages requires configuration by a user. This includes the configuration of the power stages (via a user interface, for example) so that they operate synchronously. This requires also wiring for connecting the power stage outputs in parallel. The configuration is error-prone and requires quite some effort by the user.

It is an object of the present invention to simplify parallelization of power stages.

This object is achieved by a method according to claim 1. The adapter does already provide the required wiring to connect the power stage outputs in parallel. Simply by plugging the adapter into the power stage output terminal, the power stage outputs are connected in parallel. In addition, by detecting the adapter identification, the power stages can automatically be configured to operate in synchronization to each other, Therefore, no user input or interference (other than plugging the adapter into the power stage output terminals) is required and parallelization of power stages is particularly simple.

The adapter identification on the adapter can be designed in many different ways, like as a contactless identification that is contactless detected. The adapter identification may be implemented as proximity sensor target that is detected with a proximity sensor, preferably an inductive sensor, a capacitive sensor, an optical sensor or a magnetic sensor, or as RFID tag or NFC tag that is detected with a RFID reader or NFC reader. It is also possible that at least one power stage is provided with at least one additional identification terminal and the adapter is provided with an identification connector as adapter identification that is plugged into the additional identification terminal when the adapter is plugged with its adapter terminals into the power stage output terminals of the power stages and in that the at least one of the at least two power stages detects the identification connector in the additional identification terminal, preferably via a resistor connected to the identification connector. These possibilities provided flexibility in designing the adapter.

Due to unavoidable component and runtime tolerances in the parallel-connected power stages or their axis-controller, unsymmetrical compensation currents between the parallel-connected power stages can occur despite the synchronization. Such compensation current would increase losses, would burden the power stages and would decrease the possible drive current available for driving the electromotor. Therefore, also a cross-current suppression circuitry is preferably implemented in at least one cross-current suppression circuitry. In an advantageous simple implementation, parallel connection and cross current suppression can be achieved by using a differential mode choke as electrical connection circuitry and simultaneously as cross-current suppression circuitry. The differential mode choke connects the outputs of the power stages to be connected in parallel and simultaneously limits or supresses cross-currents due to not ideally synchronized power stages.

The present invention is described below in greater detail with reference to Figs.1 to 6, which show schematic and non-limiting advantageous embodiments of the invention by way of example. In the drawings:
Fig.1 drive axis according to prior art,
Fig.2a and Fig.2b possible implementations of an electrical connection circuitry,
Fig.3 a drive axis with power stags connected in parallel according to prior art,
Fig.4 and Fig.5 a drive axis with power stags connected in parallel according to the invention,
Fig.6 an embodiment of an adapter with adapter identification.

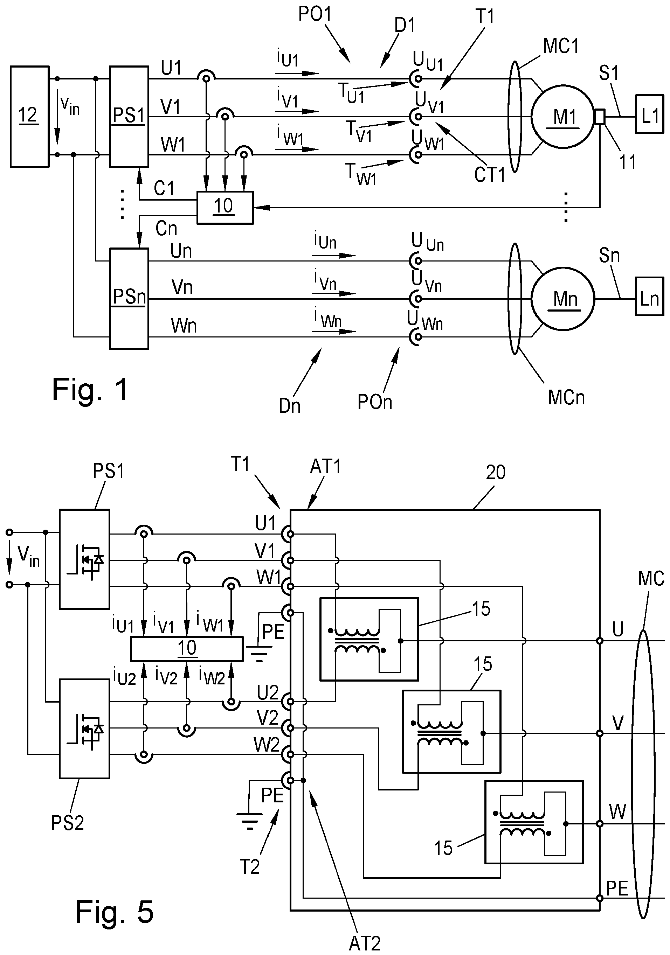

Fig.1 shows exemplarily a typical configuration of a drive axis D1. The drive axis D1 comprises an electrical power stage PS1 (in the following also just power stage) and an electromotor M1.

The power stage PS1 is usually an electrical power converter, like an AC (alternating current) / AC converter, a DC (direct current) / AC converter or a frequency converter, for example. Also combinations of different power converters are conceivable as power stage, like a combination of a AC/DC converter as input stage with an DC/AC converter as output stage, wherein an intermediate circuit in the form of at least one intermediate capacitor is arranged between the two converters.

The output of the power stage PS1 forms an electrical power system with a number of electrical phases U1, V1, W1 (at least one, often three for a 3-phase power system). The power stage PS1 provides the electrical currents i_{U1}, i_{V1}, i_{W1} and electrical voltages U_{U1}, U_{V1}, U_{W1} for each electrical phase U1, V1, W1 at its output for driving the electromotor M1 of the drive axis D1. A possible and usually present ground connection or a possible neutral line is not shown for reasons of simplicity.

The electromotor M1 of the drive axis D1 is mechanically connected to a load L1, by means of a drive shaft S1 or a power-transmitting drive (like a belt or chain drive), for example.

Usually there is also provided an axis-controller 10 for controlling the power stage PS1 with appropriate control signals C1. Controlling the power stage PS1, or generally the drive axis D1, basically means that the output electrical currents i_{U1}, i_{V1}, i_{W1} and/or the output electrical voltages U1, V1, W1 of the power stage PS1 are set as required for each point in time (usually at discrete time steps) in order to drive the electromotor M1 in the desired or required way. For controlling the power stage PS1, or generally the drive axis D1, the output electrical currents i_{U1}, i_{V1}, i_{W1} and/or output electrical voltages U_{U1}, U_{V1}, U_{W1} could be measured and provided to the axis-controller 10, as indicated in Fig.1, as actual values or state values of a closed-loop control, for example. The electromotor M1 may also be equipped with a sensor 11, like a rotary encode, for detecting information regarding the rotary or linear movement of the electromotor M1, like the angular position, speed of the drive shaft S1 or position of the moveable part of a linear motor, for example. The output signal of the sensor 11 representing the information regarding the movement of the electromotor M1 may be provided to the axis-controller 10 for controlling the drive axis D1, as indicated in Fig. 1, as actual values of a closed-loop control, for example.

The power stage PS1 has a power stage output terminal T1 having a number (corresponding to the number of electrical phases U1, V1, W1) of power stage output phase terminals T_{U1}, T_{V1}, T_{W1} (and possibly also a ground terminal and/or neutral terminal) at its power stage output PO1. The power stage output terminal T1 is usually provided in form of a suitable power outlet into which a cable connector CT1 of a motor cable MC1 is plugged for electrically connecting the electromotor M1 to the power stage PS1. The cable connector CT1 has a number of connector terminals CT_{U1}, CT_{V1}, CT_{W1} (and possibly also a ground terminal and/or neutral terminal) corresponding to the number of power stage output phase terminals T_{U1}, T_{V1}, T_{W1}. Any other electrical connection is however also conceivable.

An axis-controller 10 is usually implemented as microprocessor-based hardware with firmware running on the microprocessor-based hardware. The firmware implements at least some, preferably all, of the functions required to operate the associated power stage PS1, PS2. When a axis-controller 10 serves more than one power stage PS1, PS2, then the firmware implements at least some, preferably all, of the functions required to operate the associated power stages PS1, PS2.

It is also possible that there are provided a number n of drive axes Dn, with n ≥ 1, as in Fig. 1. Every power stage PSn may be supplied by the same electrical power supply 12 providing a supply voltage Vᵢₙ, as in Fig.1. It is however also conceivable to have separate power supplies for each drive axis Dn or for a group of drive axes.

Each drive axis Dn or power stage PSn of the drive axis Dn can be implemented as explained above with reference to drive axis D1 and power stage PS1.

There is one axis-controller 10 for each power stage PS1, PS2. The axis-controllers 10 can be implemented in one device (as in Fig.1), or there can be a separate axis-controller 10 for each power stage PS1, PS2. When there are separate axis-controller 10 devices, then the axis-controllers 10 can also be connected to each other, via a suitable connection, like a data communication bus, for example.

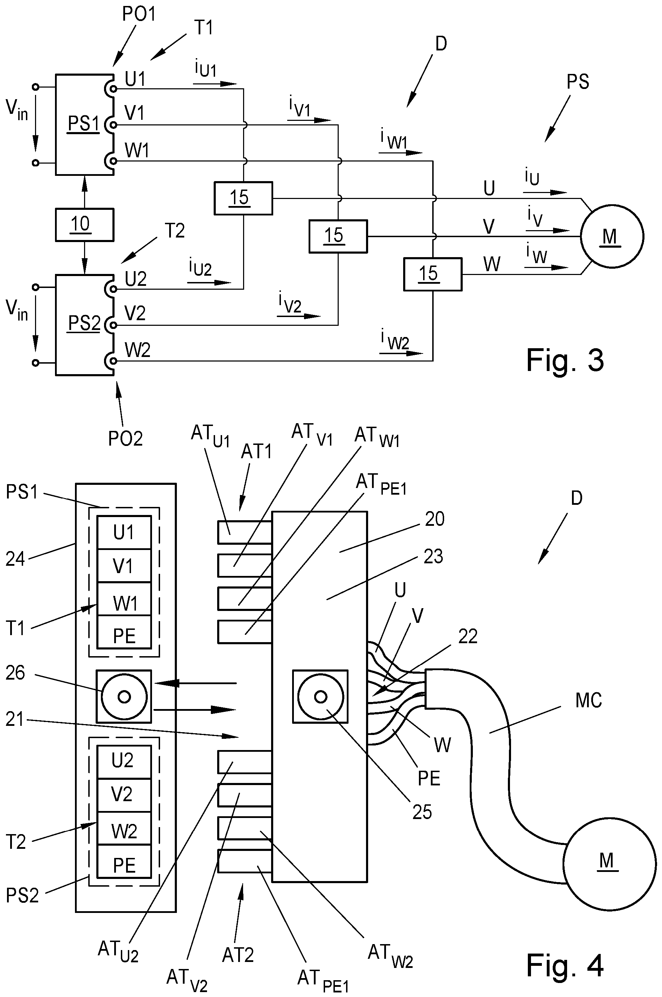

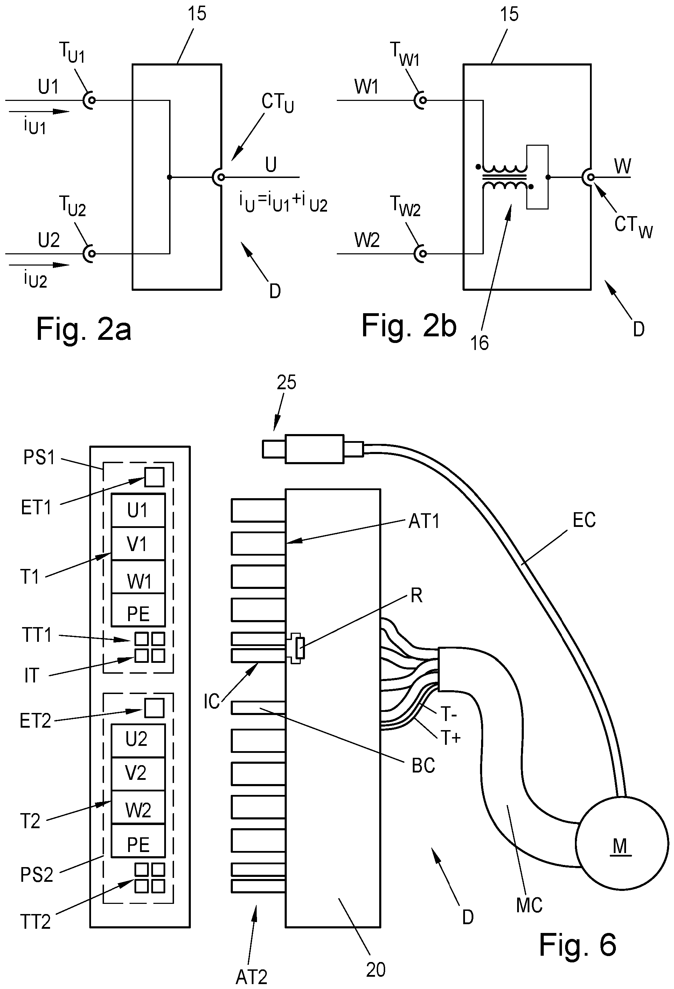

It is known that the outputs of two (or more) power stages PS1, PS2 may be connected in parallel via an electric connection circuitry 15, as exemplarily shown in Fig.3, to increase the possible electrical phase currents i_{U}, i_{V}, i_{W} for a drive axis D above the nominal currents of the single power stages PS1, PS2. "Connected in parallel" means that an electrical phase U1, V1, W1 of a first power stage PS1 is connected with a respective electrical phase U2, V2, W2 of a second power stage PS2 to from a single electrical phase U, V, W of the drive axis D. The electric connection circuitry 15 could be a simple parallel connection of two corresponding power stage output phase terminals T_{U1}, T_{V1}, T_{W1}, as shown in Fig.2a, or could be a parallel connection via a choke, like a differential mode choke as in Fig.2b. Also different implementations of an electric connection circuitry 15 using passive (like resistors, inductors, capacitances etc.) or active (like diodes, transistors etc.) electrical components are conceivable.

When the outputs of power stages PS1, PS2 are connected in parallel it is necessary that the power stage PS1, PS2 outputs are synchronized to each other. This means that the electrical output voltages U_{U1}, U_{V1}, U_{W1} and U_{U2}, U_{V2}, U_{W2} and/or output current i_{U1}, i_{V1}, i_{W1} and i_{U2}, i_{V2}, i_{W2} have the same frequency (of the electrical power system (phases U, V, W) supplying the electromotor M) and are in phase to each other. This is achieved by controlling the concerned power stages PS1, PS2 accordingly, by means of the axis-controller(s) 10, for example.

Synchronization of the power stage outputs will however not be absolutely perfect due to component tolerances of electrical components in the power stages or due to non-perfectly synchronous control software in the axis-controllers 10 because of runtime tolerances in the axis-controllers 10, for example. There might also be further reasons for deviations on the synchronization of the outputs.

Such deviations may cause electrical cross-currents flowing from one power stage into another power stage of the parallel-connected power stages PS1, PS2. Such cross-currents may decrease the efficiency of the drive axis D or may increase the stress and burden on certain electrical components in the parallel-connected power stages PS1, PS2 (like an asymmetrical load on power semiconductors in the power stages). This may be acceptable for certain applications. In other application it can be advantageous to suppress such possible cross-currents, or to at least decrease such possible cross-currents.

Therefore, in an advantageous embodiment of the invention, a cross-current suppression circuitry 16 is implemented in the electric connection circuitry 15 in addition to the parallel connection of the outputs of the power stages PS1, PS2. This can be achieved in a simple yet effective way by using a differential mode choke, as in Fig.2b, for connecting the outputs of the power stages PS1, PS2 in parallel. There can however also different electrical circuits be provided for implementing a cross-current suppression circuitry 16 for parallel-connected electrical phases U1, V1, W1, which implementations may use passive (like resistors, inductors, capacitances etc.) or active (like diodes, transistors etc.) electrical components.

In case of two parallel-connected power stages PS1, PS2, corresponding phases U1, U2 or V1, V2 or W1, W2 of the power stages PS1, PS2 are in each case connected to a first terminal of a winding of the choke with the second terminals of the windings being connected together, so that the corresponding phases U1, U2 or V1, V2 or W1, W2 are parallel connected to each other. The windings are wound on a common core. As is well-known, a differential mode choke suppresses cross-currents flowing over the windings. Therefore, the differential mode choke connects the phases of the power stages PS1, PS2 in parallel and suppresses possible cross-currents. There may also be differential mode chokes for connecting the outputs of more than two power stages PS1, PS2.

For synchronized operation of the power stages PS1, PS2, the respective axis-controllers 10 need to be configured accordingly. One of the axis-controllers 10 can operate as master and the other axis controllers 10 then operate as slaves, for example. Other types of synchronization may however also be possible and conceivable. The involved axis-controllers 10 may receive the same setpoint values of control to achieve synchronized operation, for example.

The configuration of the axis-controllers 10 can be done by setting predetermined control parameters in the control software of the axis-controllers 10 via a configuration interface, for example. This configuration needs to be done before operation of the drive axes D1, D2 commences. In any case, this requires manual configuration of the drive axes D1, D2 when they are to be operated parallel-connected. This requires, however, also to physically connect the outputs of the power stages PS1, PS2 in parallel, by means of the electric connection circuitry 15. This configuration is prone to errors and is time-consuming.

Therefore, in accordance with the invention, an adapter 20 is provided, as shown in Fig.4 and Fig.5. In the adapter 20 the electric connection circuitry 15 (as described above) is implemented in the required number according to the number of phases U, V, W for parallel-connecting the electrical phases U1, V1, W1 and U2, V2, W2 of the outputs of at least two power stages PS1, PS2. In the embodiment of Fig.4, the electrical power system comprises also ground PE. The adapter 20 has an adapter terminal AT1, AT2 for each of the power stage output terminals T1, T2 of the at least two power stages PS1, PS2. Each adapter terminal AT1, AT2 has a number of adapter phase terminals AT_{U1}, AT_{V1}, AT_{W1}, AT_{U2}, AT_{V2}, AT_{W2} corresponding to the number of electrical phases U1, V1, W1 at the outputs of the power stages PS1, PS2. In the embodiment of Fig.4, the power stages PS1, PS2 are provided in one housing. There might also be provided ground terminals AT_{PE} and/or neutral line terminals at the adapter terminals AT1, AT2 as well, as need be.

The adapter 20 is connected between the power stage output terminals T1, T2 and the electromotor M to be driven by the parallel-connected power stages PS1, PS2. To this end, the adapter 20 can be provided on a first end of a motor cable MC. The other end of the motor cable MC is connected to the electromotor M.

In general, the adapter 20 has an adapter input 21 with the adapter terminals AT1, AT2 and an adapter output 22 for connecting the adapter 20 to the electromotor M, with the motor cable MC, for example. The adapter output 22 can be implemented as adapter output socket, into which a motor cable connector CT of a motor cable MC is plugged for electrically connecting the electromotor M to the parallel-connected power stages PS1, PS2. The motor cable Mc may however also be fixed to the adapter 20.

In the embodiment of Fig.4, the adapter 20 comprises the adapter terminals AT1, AT2 for parallel-connecting the involved power stages PS1, PS2 and the required electric connection circuitries 15 in one adapter housing 23. In such an embodiment, the adapter 20 needs to be adapted to the arrangement of the power stage output terminals T1, T2 to be able to plug the adapter 20 into the power stage output terminals T1, T2. It is however also be conceivable that the adapter terminals AT1, AT2 are split with each adapter terminal AT1, AT2 being connected to the adapter housing 23 (comprising the electric connection circuitries 15) via a flexible line, like a cable. This makes it possible to connect the adapter 20 to power stages PS1, PS2 that are not arranged in a common housing 24.

The adapter 20, or at least one adapter terminals AT1, AT2 of the adapter 20, further comprises an adapter identification 25. At least one of the parallel-connected power stages PS1, PS2 comprises an adapter identification detection unit 26. When the power stages PS1, PS2 are housed in a common housing 24, the adapter identification detection unit 26 can be arranged in the housing 24 as well.

When the adapter 20, with its adapter terminals AT1, AT2, is plugged into the power stage output terminals T1, T2, the adapter identification 25 and the adapter identification detection unit 26 interact such that the adapter identification detection unit 26 can detect the adapter identification 25. When the adapter identification 25 is detected, the operation of the power stages PS1, PS2 is changed so that the power stages PS1, PS2 operate synchronously. This comprises the step of automatically configuring the powers stages PS1, PS2, or their axis-controller 10, so that they operate in synchronization.

Therefore, as the adapter 20 does already comprise the required electric connection circuitries 15, two power stages PS1, PS2 can simply be switched into parallel operation mode by plugging the adapter 20 into the power stage output terminals T1, T2. This automatically connects the phases U1, V1, W1 and U2, V2, W2 of the outputs of the power stages PS1, PS2 in parallel via the electric connection circuitry 15. Furthermore, this causes the power stages PS1, PS2 to be operated in synchronous mode. No manual configuration of the power stages PS1, PS2 (or its axis-controllers 10) or manual wiring of the outputs of the power stages PS1, PS2 is required any longer.

The adapter identification 25 can be implemented in many different way, like electrically, magnetically, as RFID (radio frequency identification) tag or as NFC (near field communication) tag etc. The adapter identification detection unit 26 is to be implemented accordingly.

The adapter identification 25 can be a simple resistor having a defined resistance value. The adapter identification detection unit 26 could measure the resistance value to detect presence of the adapter 20.

The adapter identification detection unit 26 could also be implemented as contactless identification, like as proximity sensor for detecting proximity of the adapter identification 25, with the adapter identification 25 of the adapter 20, or an adapter terminal AT1, AT2, as proximity sensor target. The proximity sensor could by an inductive sensor, capacitive sensor, sound sensor (using ultrasonic, for example), optical sensor (using infrared, for example), magnetic sensor (like a Hall effect sensor or Reed contact, for example), etc. Another contactless identification detection system could use an RFID or NTC tag as adapter identification 25 and an RFID reader or NFC reader as adapter identification detection unit 26. An RFID or NFC tag could be active or passive.

The adapter identification 25 could also be implemented as identification connector IC provided on the adapter 20. On one of the power stages PS1, PS2 to be connected in parallel, an additional identification terminal IT is provided. Plugging the adapter 20, or its adapter terminals AT1, AT2 to be more precise, into the power stage output terminals T1, T2 then comprises also the step of plugging the identification connector IC into the additional identification terminal IT. This can be detected. A defined resistor R could be provided on the identification connector IC that could be measured when the identification connector IC is plugged into the additional identification terminal IT. The additional identification terminal IT could be a not used terminal of a power stage PS1, PS2.

Often, a power stage PS1, PS2 comprises more terminals than the power stage output terminals T1, T2. Frequently, a power stage PS1, PS2 comprises an encoder terminal ET1, ET2, for connecting an encoder 11 of the driven electromotor M to the power stage PS1, PS2, via an encoder cable EC, for example. It is also possible that the power stage PS1, PS2 comprises a temperature sensor terminal TT1, TT2 for connecting a temperature sensor of the electromotor M to the respective power stage PS1, PS2, via temperature sensor lines T+, T-, for example. When two (or more) power stages PS1, PS2 are connected in parallel, only one electromotor M is driven by the parallel-connected power stages PS1, PS2. Therefore, only one encoder 11 and/or one temperature sensor can be connected to the power stages PS1, PS2. This means that not all encoder terminals ET1, ET2 and/or all temperature sensor terminals TT1, TT2 are required for operating the drive axis D. The encoder 11 can be connected to one of the encoder terminals ET1, ET2 and/or the temperature sensor can be connected to one of the temperature sensor terminals TT1, TT2, as indicated in Fig.6. The other, non-used encoder terminals ET1, ET2 and/or temperature sensor terminals TT1, TT2 may be used as additional identification terminal IT and a respective connector on the adapter 20 as identification connector IC (as adapter identification 25 or part of the adapter identification 25).

Also a combination of different identification types could be used as adapter identification 25, as explained with reference to Fig.6. In a combination of different identification types also a contactless detection of the adapter identification 25 could be used together with other types.

In the embodiment of Fig.6, the adapter 20 comprises a resistor R that connects two terminals of the identification connector IC at the adapter 20. Th e identification connector ICis plugged into the temperature sensor terminal TT1, that is not used for temperature sensing, as additional identification terminal IT when the adapter 20 is plugged into the power stage output terminals T1, T2. This resistor R can be detected by the adapter identification detection unit 26 in that the resistance value of the resistor R (which is predefined) is measured. The combination of this resistor R with an encoder 11 connected to one of the encoder terminals ET1 and with another encoder terminal ET2 unused can be detected as adapter identification 25 to switch the power stages PS1, PS2 into parallel operation mode.

A blind connector BC could be provided on the adapter 20 that plugs into an unused encoder terminal ET2 when the adapter 20 is plugged into the power stage output terminals T1, T2 to prevent wrong connection of the adapter 20.

The adapter identification detection unit 26 can be implemented into the axis-controller 10 of a power stage PS1, PS2. The adapter identification detection unit 26 could be part of the firmware of the axis-controller 10, for example.

## Claims

1. Method for connecting at least two power stages (PS1, PS2) in parallel at their respective power stage outputs (PO1, PO2), wherein each of the power stage outputs (PO1, PO2) provides a number of electrical phases (U1, V1, W1; U2, V2, W2) of an electrical power system at a corresponding number of power stage output phase terminals (T_{U1}, T_{V1}, T_{W1}; T_{U2}, T_{V2}, T_{W2}) of a power stage output terminal (T1, T2), the method comprising the steps of
- Providing an adapter (20) having an adapter identification (25), an adapter terminal (AT1, AT2) for each of the power stage output terminals (T1, T2) of the at least two power stages (PS1, PS2) to be connected in parallel and an electric connection circuitry (15) for each electrical phase (U, V, W) of the electrical power system of the parallel-connected at least two power stages (PS1, PS2), wherein each of the adapter terminals (AT1, AT2) of the adapter (20) having a number of adapter phase terminals (AT_{U1}, AT_{V1}, AT_{W1}; AT_{U2}, AT_{V2}, AT_{W2}) according to the number of power stage output phase terminals (T_{U1}, T_{V1}, T_{W1}; T_{U2}, T_{V2}, T_{W2}) of the power stage output terminals (T1, T2) of the at least two power stages (PS1, PS2) to be connected in parallel, and wherein each electrical connection circuitry (15) connects the adapter phase terminals (AT_{U1}, AT_{V1}, AT_{W1}; AT_{U2}, AT_{V2}, AT_{W2}) of the adapter terminals (AT1, AT2) corresponding to the same electrical phase (U, V, W) of the electric power system in parallel,
- Plugging the adapter (20) with its adapter terminals (AT1, AT2) into the power stage output terminals (T1, T2) of the at least two power stages (PS1, PS2) so that each adapter phase terminal (AT_{U1}, AT_{V1}, AT_{W1}; AT_{U2}, AT_{V2}, AT_{W2}) of the adapter terminals (AT1, AT2) is connected to a power stage output phase terminal (T_{U1}, T_{V1}, T_{W1}; T_{U2}, T_{V2}, T_{W2}) of a power stage output terminal (T1, T2),
- Detecting the adapter identification (25) with an adapter identification detection unit (26) of at least one of the at least two power stages (PS1, PS2) when the adapter terminals (AT1, AT2) of the adapter (20) is plugged into the power stage output terminals (T1, T2), and upon detection of the adapter identification (25),
- Changing operation of the at least two parallel-connected power stages (PS1, PS2) so that the parallel-connected power stages (PS1, PS2) are operated in synchronization to each other.

2. Method according to claim 1, **characterized, in that** the operation of the parallel-connected power stages (PS1, PS2) are synchronized by controlling the power stages (PS1, PS2) that the electrical output voltages (U_{U1}, U_{V1}, U_{W1}; U_{U2}, U_{V2}, U_{W2}) and/or output currents (i_{U1}, i_{V1}, i_{W1}; i_{U2}, i_{V2}, i_{W2}) of the parallel-connected power stages (PS1, PS2) have the same frequency and are in phase to each other.

3. Method according to claim 1 or 2, **characterized, in that** the adapter identification (25) on the adapter (20) is a contactless identification that is contactless detected.

4. Method according to claim 3, **characterized, in that** the adapter identification (25) is implemented as proximity sensor target that is detected with a proximity sensor as adapter identification detection unit (26), preferably an inductive sensor, a capacitive sensor, an optical sensor or a magnetic sensor.

5. Method according to claim 3, **characterized, in that** the adapter identification (25) is implemented as RFID tag or NFC tag that is detected with a RFID reader or NFC reader as adapter identification detection unit (26).

6. Method according to one of claims 1 to 5, **characterized, in that** at least one of the at least two power stages (PS1, PS2) is provided with at least one additional identification terminal (IT) and the adapter (20) is provided with an identification connector (IC) as adapter identification (25) that is plugged into the additional identification terminal (IT) when the adapter (20) is plugged with its adapter terminals (AT1, AT2) into the power stage output terminals (T1, T2) of the at least two power stages (PS1, PS2) **and in that** the at least one of the at least two power stages (PS1, PS2) detects the identification connector (IC) in the additional identification terminal (IT).

7. Method according to claim 6, **characterized, in that** a defined resistor (R) is provided on the identification connector (IC) **and in that** the at least one of the at least two power stages (PS1, PS2) detects the resistor (R) when the identification connector (IC) is plugged into the additional identification terminal (IT).

8. Arrangement with at least two power stages (PS1, PS2) connected in parallel at their respective power stage outputs (PO1, PO2) and with an adapter (20), wherein each of the power stage outputs (PO1, PO2) provides a number of electrical phases (U1, V1, W1; U2, V2, W2) of an electrical power system at a corresponding number of power stage output phase terminals (T_{U1}, T_{V1}, T_{W1}; T_{U2}, T_{V2}, T_{W2}) of a power stage output terminal (T1, T2), wherein the adapter (20) comprises an adapter identification (25), an adapter terminal (AT1, AT2) for each of the power stage output terminals (T1, T2) of the at least two power stages (PS1, PS2) to be connected in parallel and an electric connection circuitry (15) for each electrical phase (U, V, W) of the electrical power system of the parallel-connected at least two power stages (PS1, PS2), wherein each of the adapter terminals (AT1, AT2) of the adapter (20) having a number of adapter phase terminals (AT_{U1}, AT_{V1}, AT_{W1}; AT_{U2}, AT_{V2}, AT_{W2}) according to the number of power stage output phase terminals (T_{U1}, T_{V1}, T_{W1}; T_{U2}, T_{V2}, T_{W2}) of the power stage output terminals (T1, T2) of the at least two power stages (PS1, PS2) to be connected in parallel, and wherein each electrical connection circuitry (15) connects the adapter phase terminals (AT_{U1}, AT_{V1}, AT_{W1}; AT_{U2}, AT_{V2}, AT_{W2}) of the adapter terminals (AT1, AT2) corresponding to the same electrical phase (U, V, W) of the electric power system in parallel, wherein the adapter (20) is plugged with its adapter terminals (AT1, AT2) into the power stage output terminals (T1, T2) of the at least two power stages (PS1, PS2) so that each adapter phase terminal (AT_{U1}, AT_{V1}, AT_{W1}; AT_{U2}, AT_{V2}, AT_{W2}) of the adapter terminals (AT1, AT2) is connected to a power stage output phase terminal (T_{U1}, T_{V1}, T_{W1}; T_{U2}, T_{V2}, T_{W2}) of a power stage output terminal (T1, T2), wherein at least one of the at least two power stages (PS1, PS2) is provided with an adapter identification detection unit (26) that is arranged to detect the adapter identification (25) on the adapter (20), and wherein there is provided an axis-controller (10) for each parallel-connected power stage (PS1, PS2), the axis-controllers (10) are arranged to control the parallel-connected power stages (PS1, PS2) so that the parallel-connected power stages (PS1, PS2) operate in synchronization when the adapter identification detection unit (26) detects the adapter identification (25).

9. Arrangement according to claim 8, **characterized, in that** the axis-controllers (10) are arranged to control the parallel-connected power stages (PS1, PS2) that the electrical output voltages (U_{U1}, U_{V1}, U_{W1}; U_{U2}, U_{V2}, U_{W2}) and/or output currents (i_{U1}, i_{V1}, i_{W1}; i_{U2}, i_{V2}, i_{W2}) of the parallel-connected power stages (PS1, PS2) have the same frequency and are in phase to each other.

10. Arrangement according to claim 8 or 9, **characterized, in that** the adapter identification (25) on the adapter (20) is a contactless identification that is contactless detected with the adapter identification detection unit (26).

11. Arrangement according to claim 10, **characterized, in that** the adapter identification (25) is implemented as proximity sensor target that is detected with a proximity sensor as adapter identification detection unit (26), preferably an inductive sensor, a capacitive sensor, an optical sensor or a magnetic sensor.

12. Arrangement according to claim 10, **characterized, in that** the adapter identification (25) is implemented as RFID tag or NFC tag that is detected with a RFID reader or NFC reader as adapter identification detection unit (26).

13. Arrangement according to one of claims 8 to 12, **characterized, in that** at least one of the at least two power stages (PS1, PS2) is provided with at least one additional identification terminal (IT) and the adapter (20) is provided with an identification connector (IC) as adapter identification (25) that is plugged into the additional identification terminal (IT) when the adapter (20) is plugged with its adapter terminals (AT1, AT2) into the power stage output terminals (T1, T2) of the parallel-connected power stages (PS1, PS2), **and in that** the adapter identification detection unit (26) of at least one of the at least two power stages (PS1, PS2) is arranged to detect the identification connector (IC) plugged into the additional identification terminal (IT).

14. Arrangement according to claim 13, **characterized, in that** a defined resistor (R) is provided on the identification connector (IC), **and in that** the adapter identification detection unit (26) of at least one of the at least two power stages (PS1, PS2) is arranged to detect the resistor (R) when the identification connector (IC) is plugged into the additional identification terminal (IT).

15. Arrangement according to one of claims 8 to 14, **characterized, in that** at least one electrical connection circuitry (15) comprises a cross-current suppression circuitry, preferably a differential mode choke.

16. Drive axis with an arrangement according to one of claims 8 to 15 and with an electromotor (M), wherein the electromotor (M) is connected with a motor cable (MC) to the parallel-connected phases (U, V, W) of the adapter (20), preferably by plugging a motor cable connector (CT) of the motor cable (MC) into an adapter output of the adapter (20).
